(19) Europäisches Patentamt
European Patent Office
Office européen des brevets

(11) **EP 3 674 744 B1**

(12) **EUROPÄISCHE PATENTSCHRIFT**

(45) Veröffentlichungstag und Bekanntmachung des Hinweises auf die Patenterteilung:
**24.11.2021  Patentblatt 2021/47**

(51) Int Cl.:
*G01S 7/497* (2006.01)　　　*G01S 17/931* (2020.01)

(21) Anmeldenummer: **19215439.1**

(22) Anmeldetag: **11.12.2019**

(54) **VERFAHREN ZUR KALIBRIERUNG DER AUSRICHTUNG EINES SICH BEWEGENDEN OBJEKTSENSORS**

METHOD FOR CALIBRATING THE ORIENTATION OF A MOVING OBJECT SENSOR

PROCÉDÉ D'ÉTALONNAGE DE L'ALIGNEMENT D'UN CAPTEUR D'OBJET EN MOUVEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2018  DE 102018133693**

(43) Veröffentlichungstag der Anmeldung:
**01.07.2020  Patentblatt 2020/27**

(73) Patentinhaber: **Volkswagen Aktiengesellschaft 38440 Wolfsburg (DE)**

(72) Erfinder:
• **Koch, Niklas**
  **38448 Wolfsburg (DE)**
• **Merfels, Christian**
  **38102 Braunschweig (DE)**
• **Kekec, Ugur**
  **30455 Hannover (DE)**

(56) Entgegenhaltungen:
**DE-A1- 10 122 664　　DE-A1-102012 018 012
DE-A1-102013 209 494**

**Beschreibung**

Die vorliegende Erfindung betrifft ein Verfahren zur Kalibrierung der Ausrichtung eines sich bewegenden Objektsensors, insbesondere eines Objektsensors der in einem Fahrzeug bewegt wird, beispielsweise eines in dem Fahrzeug verbauten Objektsensors.

In modernen Kraftfahrzeugen, insbesondere in teilautonom oder in autonom fahrenden Kraftfahrzeugen sind unterschiedlichste Sensoren verbaut, die der Eigenlokalisation des Fahrzeugs bezüglich der Fahrzeugumgebung dienen. Dazu werden mittels einer speziellen Sensorik markante statische Strukturen und Muster, sogenannte Ortungsmerkmale, in der Umgebung des Fahrzeugs erfasst und zur Positionierung des Fahrzeugs bezüglich dieser Ortungsmerkmale verwendet. Typische Sensoren sind Kameras, Radar-, Ultraschall- oder Laserscannereinrichtungen. Während der Fahrt können durch Verarbeitung der von der Sensorik erfassten Sensordaten Strukturen von Interesse erkannt und entsprechenden Eintragungen in einer Karte zugeordnet werden, um die Fahrzeugposition und die Ausrichtung des Fahrzeugs zu berechnen. Die Güte einer solchen während der Fahrt automatisch ablaufenden Positionierung hängt wesentlich von der Genauigkeit der Erfassung von Ortungsmerkmalen und der Wichtigkeit ihrer Zuordnung beispielsweise zuvor bekannten Kartenobjekten sein. Die Genauigkeit der Messung ist wiederum abhängig von der jeweils eingesetzten Sensorik und ihrer Kalibrierung.

Eine Kalibrierung der Sensorik ist komplex, erfordert Zeit und es sollte, idealerweise auch während einer Fahrt, regelmäßig wiederholt werden, denn die Parameter, die sich durch den Kalibrierprozess ergeben, beziehen sich immer nur auf eine Momentaufnahme der Sensoreigenschaften, die sich beispielsweise durch mechanische oder thermische Einflüsse im Laufe der Zeit verändern können.

Bei dem Kalibrierprozess werden extrinsische und intrinsische Parameter der Sensoren bestimmt. Während die intrinsischen Parameter für jeden Sensoren spezielle Eigenschaften und Abweichungen der Messprozedur des Sensors beschreiben, sind mit den extrinsischen Parametern im Wesentlichen die konkrete Verbauposition und Ausrichtung des Sensors im Fahrzeug, beispielsweise die Ausrichtung des Sensors bezüglich der Fahrzeuglängsachse, festgelegt. Gerade bezüglich der Ausrichtung des Sensors können schon kleinste Veränderungen der Ausrichtung einen großen Einfluss auf Messungen im Fernbereich haben, was die Positionierung deutlich beeinträchtigt.

Ein Aspekt stellt dabei die laterale Abweichung der tatsächlichen Position des Sensors bezüglich der Fahrzeugachse dar. Üblicherweise kann die laterale Position des Fahrzeugsensors schon während des Einbaus mit großer Genauigkeit bestimmt werden, so dass sich abhängig von den Maßen des jeweiligen Fahrzeugmodells eine zuverlässige Bestimmung der lateralen Abweichung der Sensorposition bezüglich einer Fahrzeuglängsachse beziehungsweise des von dem Fahrzeug benutzten Fahrstreifens bestimmen lässt. Etwaige Fehler bei der Vermessung der Verbauposition oder anschließend während der Benutzung des Sensors im Fahrzeug auftretende Fehler bezüglich der lateralen Abweichung übertragen sich eins zu eins auf den Positionsfehler eines detektierten Objektes in der Fahrzeugumgebung. Die durch laterale Abweichungen verursachten Fehler der Positionsbestimmung sind daher in der Regel vernachlässigbar klein.

Ein wesentlich größeres Problem stellt die Orientierung des Sensors im Raum dar, da sich Winkelfehler abhängig von der Distanz zwischen Sensor und detektiertem Objekt unterschiedlich stark auf die Positionsbestimmung auswirken. Bei einem Azimut-Winkelfehler von beispielsweise 1 Grad beträgt der laterale Fehler bei einem 60 Meter entfernten Messpunkt bereits cirka 1 Meter. Dabei ist der Fehler umso größer, je weiter sich der Sensor vom Objekt entfernt befindet. Abweichungen der Orientierung des Sensors im Raum treten auch bei höchstmöglicher Sorgfalt beim Einbau des Sensors im dauerhaften Betrieb häufig auf.

Aus dem Stand der Technik sind, beispielsweise aus dem Bereich der Robotik, Verfahren bekannt, Sensoren beispielsweise bezüglich ihrer Ausrichtung zu kalibrieren. Die wenigstens im Stand der Technik beschriebenen Lösungen arbeiten vollautomatisch. Häufig ist auch eine anschließende Validierung der gefundenen Kalibrierparameter erforderlich. Kalibrierprozesse sind häufig auch sehr zeitaufwändig und erfordern speziell geschultes Personal, da insbesondere die Validierung eines Kalibrierverfahrens meist nur mit speziellen technischen Hilfsmitteln durchgeführt werden kann.

In der US-Patentanmeldung US2010/0165102 A1 wird beispielsweise ein Verfahren zu Bestimmung des Neigewinkels einer Fahrzeugkamera mittels Bildverarbeitung beschrieben, wobei ein stationäres Objekt auf mehreren Bildern der in einem Fahrzeug verbauten, sich bewegenden Kamera erfasst wird und durch Veränderung der Position des stationären Objektes in den einzelnen Bildern auf eine Kameraabweichung zurückgeschlossen wird. Dabei wird angenommen, dass sich das Fahrzeug auf einer privaten Linie bewegt. Ferner wird ein Lenkwinkel des Fahrzeugs erfasst, um einen Einfluss der Ausrichtung der Fahrzeugachse auf die Messung ausschließen zu können.

In US2016/02267657 A1 wird ein Verfahren zur dynamischen Kalibrierung einer Fahrzeugkamera beschrieben, bei welcher eine in dem Fahrzeug verbaute Kamera auf einer geraden Linie bewegt wird und aus mehreren in den Bildern detektierten Objekten Objekttrajektorien ermittelt werden aus denen wiederum ein Fluchtpunkt der Objekttrajektorien bestimmt wird. Aus der Lageänderung des Fluchtpunktes kann dann eine mögliche Fehlausrichtung der Kamera ermittelt werden.

Auch in JP 2008 222 345 A wird ein kamerabasiertes Verfahren beschrieben, in welchem aus der zeitlichen Veränderung der Positionen mehrerer von der Kamera detektierter statischer Objekte auf eine Fahrzeugbewegung zurückgerechnet wird.

In US 2013/0218398 A1 wird ein Verfahren zur Bestimmung der Fehlausrichtung eines Objektsensors beschrieben, bei dem während einer geradlinigen Fahrzeugbewegung ein oder mehrere Objekte erfasst und der zeitliche Verlauf des Winkels, unter welchem die Objekte bei bewegendem Fahrzeug erfasst werden, mit einem aus der Fahrzeugbewegung erwarteten Winkel verglichen werden. Aus einer Abweichung zwischen gemessenem und erwarteten Wert wird dann auf eine eventuelle Fehlausrichtung des Sensors geschlossen.

Ein ähnliches Verfahren wird in US 2015/0276923 A1 beschrieben, bei dem ein stationäres Objekt zu wenigstens zwei unterschiedlichen Zeiten erfasst und durch Abweichungen zwischen den aus Fahrzeugbewegungen erwarteten Erfassungswinkeln und detektierten Erfassungswinkeln auf eine Fehlausrichtung des Sensors zurückgerechnet wird. wird.

DE102012018012 A1 beschreibt ein Verfahren zur Kalibrierung der Ausrichtung eines sich bewegenden Objektsensors, bei dem die Bewegung des Objektsensors erfasst, wenigstens ein statisches Objekt durch den sich bewegenden Objektsensor bei unterschiedlichen Positionen des Objektsensors mehrfach detektiert und die relativen Positionen des statischen Objekts bezüglich der korrespondierenden Positionen des Objektsensors berechnet werden.

Schließlich ist aus WO2016/198563 A1 ein Verfahren bekannt, bei dem eine Fehlausrichtung eines Radarsensors ermittelt wird, bei dem wenigstens ein stationäres Objekt während einer Fahrzeugbewegung mehrfach detektiert wird, die detektierten Positionen unter Einbeziehung von Korrekturfaktoren in ein globales Koordinatensystem umgerechnet werden und der Fehler bei der Anwendung der Korrekturfaktoren minimiert wird.

Der Erfindung liegt das technische Problem zu Grunde, die aus dem Stand der Technik bekannten Verfahren robuster zu gestalten, so dass bei geringem Rechenaufwand eine regelmäßige Kalibrierung von Objektsensoren während des Betriebs eines Fahrzeugs ermöglicht wird.

Gelöst wird dieses technische Problem durch das Verfahren des vorliegenden Anspruchs 1. Vorteilhafte Weiterbildungen des erfindungsgemäßen Verfahrens sind Gegenstand der abhängigen Ansprüche.

Die Erfindung betrifft daher ein Verfahren zur Kalibrierung der Ausrichtung eines sich bewegenden Objektsensors, welches die Schritte umfasst: Erfassung der Bewegung des Objektsensors, mehrfache Detektion wenigstens eines statischen Objektes durch den sich bewegenden Objektsensor bei unterschiedlichen Positionen des Objektsensors, Berechnen der relativen Position des statischen Objekts bezüglich der korrespondierenden Positionen des Objektsensors, Berechnen von erwarteten Positionen des statischen Objekts aus den relativen Positionen unter Annahme eines Ausrichtungsfehlers des Objektsensors, Berechnen einer Fehlerkenngröße aus den erwarteten Positionen und Minimieren der Fehlerkenngröße durch Anpassung des Ausrichtungsfehlers des Objektsensors.

Die Erfindung schlägt also vor, eine Sensorkalibrierung anhand eines Ausrichtungsfehlers des Objektsensors vorzunehmen. Durch die damit verbundene Reduzierung der zur Sensorkalibrierung erforderlichen Datenerfassung beziehungsweise Datenverarbeitung auf wenige, robust erfassbare Merkmale, steigert sich sowohl die Robustheit der Ermittlung eines eventuellen Ausrichtungsfehlers als auch die Berechnungsgeschwindigkeit im Betrieb.

Das erfindungsgemäße Verfahren geht von der Überlegung aus, dass bei einer fehlerfreien Detektion eines statischen Objektes die berechnete relative Position des statischen Objektes bezüglich der korrespondierenden Position des Objektsensors lediglich von der Bewegung des Objektsensors abhängt. Bei Berücksichtigung der Bewegung des Objektsensors sollte sich die Position des statischen Objektes daher nicht verändern. Unter Berücksichtigung eines Ausrichtungsfehlers des Objektsensors werden jedoch die detektierten relativen Positionen des statische Objektes bezüglich den korrespondierenden Positionen des Objektsensors von den erwarteten Positionen des statischen Objektes abweichen. Erfindungsgemäß wird daher vorgeschlagen, die erwarteten Positionen unter Annahme eines Ausrichtungsfehlers des Objektsensors zu berechnen. Wenn der angenommene Ausrichtungsfehler dem tatsächlichen Ausrichtungsfehler des Objektsensors entspricht, sollten die erwarteten Positionen des statischen Objektes sich unter Berücksichtigung der Bewegung des Objektsensors nicht verändern. Wenn der angenommene Ausrichtungsfehler dem tatsächlichen Ausrichtungsfehler nicht entspricht, wird man für die einzelnen erwarteten Positionen Abweichungen untereinander feststellen. Aus diesen Abweichungen kann eine Fehlerkenngröße der erwarteten Position ermittelt werden. Der angenommene Ausrichtungsfehler wird dann so angepasst, dass die Fehlerkenngröße minimiert wird. Der Ausrichtungsfehler, bei dem die Fehlerkenngröße minimal ist entspricht dann dem tatsächlichen Ausrichtungsfehler des Objektsensors.

Das erfindungsgemäße Verfahren kann durch Detektion unterschiedlichster statischer Objekte verwirklicht werden. Beispielsweise können flächige Objekte detektiert werden wobei beispielsweise überprüft werden kann, wie gut die zu unterschiedlichen Zeiten erfassten Flächen unter Berücksichtigung eines Ausrichtungsfehlers miteinander in Deckung gebracht werden können. Aus flächigen Objekten können beispielsweise auch mittels geeigneter Bildverarbeitung, wie Kantendetektion, einzelne Merkmale extrahiert werden, welche in dem erfindungsgemäßen Verfahren weiterverarbeitet werden.

Zur Reduzierung der anfallenden Daten wird vorgeschlagen, dass der Objektsensor das wenigstens eine statische Objekt in einer Ebene detektiert. Besonders bevorzugt arbeitet das erfindungsgemäße Verfahren daher zweidimensional. Auch wenn die von dem Objektsensor gelieferten Daten dreidimensionale Daten sind, kann bei einer Variante des erfindungsgemäßen Verfahrens jeweils eine zweidimensionale Ebene aus dem dreidimensionalen Datensatz zur Weiterverarbeitung extrahiert werden.

Besonders robuste Daten zur Sensorkalibrierung ergeben sich, wenn bei einer zweidimensionalen Leistung das wenigstens eine statische Objekt ein längliches Objekt ist, das dann in der Detektionsebene im Wesentlichen punktförmig erscheint. Punktförmige Daten von den zur Sensorkalibrierung herangezogenen statischen Objekten lassen sich auch bei rauschbehafteten Daten besonders zuverlässig erfassen und bei Bewegung des Fahrzeugs gut verfolgen. Geeignete längliche, stangenförmige Objekte, die sich häufig in einem Fahrzeugumfeld befinden, sind beispielsweise Verkehrsschilder, Ampeln, Laternen, Leitpfosten usw. Bei einer dreidimensionalen Detektion können aber auch Fahrbahnmarkierungen, Flächen wie Gebäudefassaden, Zäune, Leitplanken und ähnliches zur Datenauswertung herangezogen werden.

Gemäß einer Variante des erfindungsgemäßen Verfahrens umfasst der Ausrichtungsfehler des Objektsensors einen Azimutwinkelfehler. Der Azimutwinkelfehler stellt bei der Sensorkalibrierung meist den Fehler mit der größten Auswirkung auf die Positionserfassung von statischen Objekten dar, da sich der Azimutwinkelfehler insbesondere mit zunehmender Entfernung des Objekts vom Sensor immer stärker auswirkt. Bei einer in einer zweidimensionalen Ebene arbeitenden Variante des erfindungsgemäßen Verfahrens kann man berücksichtigen, dass zu dem detektierten Azimutwinkelfehler zu kleineren Teilen auch Ausrichtungsfehler in den übrigen Raumwinkelrichtungen beitragen können. Wird die Auswertung lediglich auf den Azimutwinkelfehler reduziert, so bezieht sich die Fehlerkorrektur faktisch auf einen "Pseudo-Azimut-Winkel", da unterstellt wird, der gesamte Fehler gehe auf den Azimutwinkel zurück. Je nach Ausmaß des Einflusses der übrigen Winkelfehler auf den Azimutwinkel kann der mit dem erfindungsgemäße Verfahren ermittelte Pseudo-Azimutwinkel nicht in jedem Fall als Korrekturwinkel für die Korrektur/Weiterverarbeitung übriger Sensordaten herangezogen werden, da der ermittelte Pseudo-Azimut-Winkel dann nicht dem tatsächlichen Azimutwinkelfehler entspricht. In diesen Fällen kann das erfindungsgemäße Verfahren zumindest als Hinweis auf einen Ausrichtungsfehler des Objektsensors dienen und zur Erzeugung einer entsprechenden Warnmeldung herangezogen werden.

Gemäß einer Variante des erfindungsgemäßen Verfahrens wird die Fehlerkenngröße durch Ändern des Azimutwinkelfehlers iterativ minimiert. Dazu nimmt man beispielsweise einen größtmöglichen Fehler für den Azimutwinkel an. Unter Berücksichtigung des größtmöglichen Fehlers wird die Position des statischen Objektes ermittelt. Durch geschicktes Variieren des Azimutwinkelfehlers, erneutes Berechnen der Objektpositionen und Bestimmen der Fehlerkenngröße kann mittels eines geeigneten Abbruchkriteriums der tatsächliche Azimutwinkelfehler ermittelt werden. Das Abbruchkriterium kann beispielsweise beinhalten, dass sich die Fehlerkenngröße durch immer kleiner werdende Änderungen des Azimutwinkelfehlers nicht mehr signifikant ändert.

Gemäß einer Variante des erfindungsgemäßen Verfahrens kann die Fehlerkenngröße über ein Optimierungsverfahren minimiert werden. Beispielsweise kann man ein Optimierungsproblem so formulieren, dass die Fehlerkenngröße bezüglich des Azimutwinkelfehlers minimal wird. Geeignete Optimierungsverfahren sind beispielsweise an sich bekannte Methoden der Ausgleichsrechnung, beispielsweise basierend auf Gauß-Markov-Modellen.

Als geeignete Fehlerkenngröße, die minimiert werden soll, können unterschiedlichste Werte herangezogen werden. Für punktförmige statische Objekte können beispielsweise die Mittelwerte der erwarteten Positionen des statischen Objekts als Fehlerkenngröße herangezogen werden.

Eine geeignete Fehlerkenngröße kann beispielsweise auch aus dem Helmert'schen Punktfehler abgeleitet werden. Der Helmert'sche Punktfehler eines Objektes ergibt sich in zwei Dimensionen aus der Wurzel der Summe der quadrierten Standardabweichungen der x-Koordinate des Objekts und der quadrierten Standardabweichung der y-Koordinate des Objekts. Dies kann durch folgende Gleichung dargestellt werden:

$$s_{P_i}^H = \sqrt{s_{x_i}^2 + s_{y_i}^2},$$

Dabei sind:

$s_{P_i}^H$ = Helmert'scher Punktfehler des i-ten Objekts ,

$s_{x_i}^2$ = Standardabweichung der X-Koordinate des i-ten Objekts und

$s_{y_i}^2$ = Standardabweichung der Y-Koordinate des i-ten Objekts .

Vorzugsweise werden mehr als ein statisches Objekt erfasst. Als Fehlerkenngröße bei punktförmigen statischen Objekten im Zweidimensionalen kann in diesem Fall die Summe der Helmert'schen Punktfehler $s_{sum}^H$ als Fehlerkenngröße herangezogen und durch geeignete Variation des Azimutwinkelfehlers minimiert werden:

$$s_{sum}^H = \sum_{i=1}^{n} \left(s_{P_i}^H\right)$$

Der Helmert'sche Punktfehler eignet sich auch als Maß für die Kompaktheit oder Güte der Zuordnung der Detektionen der wiederholt erfassten Objekte. Werden mehrere Objekte mehrere Male in aufeinander folgenden Messungen detektiert, können diese wiederholt erfassten Objekte mit Hilfe eines Tracking-Verfahrens einander zugeordnet werden. Diese Zuordnung kann häufig bereits durch die Sensorverarbeitung erfolgen.

Werden mehrere statische Objekte erfasst, so kann bei der Sensordatenverarbeitung unter der Voraussetzung, dass die relativen Positionen der statischen Objekte unverändert bleiben sollen, bereits aus dem Tracking der statischen Objekte die Bewegung des Objektsensors selbst errechnet werden.

Bei einer Alternative des erfindungsgemäßen Verfahrens wird die Fahrzeugposition und Fahrtrichtung zum Zeitpunkt jeder Detektion separat erfasst, beispielsweise mittels geeigneter weiterer, an dem Objektsensor oder an dem Fahrzeug, in welchem der Objektsensor verbaut ist, vorhandenen Sensoren, wie Geschwindigkeitssensoren, Richtungssensoren, die beispielsweise über Lenkwinkelsensoren erfasst werden können und Ähnliches.

Häufig sind auch satellitengestützte Navigationssensoren vorhanden, mit denen die absoluten Positionen des Objektsensors bei jeder Detektion erfasst werden können. Zur Erhöhung der Genauigkeit der Erfassung der Sensorbewegung können auch absolute Positionsbestimmungsverfahren, wie beispielsweise Satellitennavigationsverfahren, und relative Bewegungsinformationen kombiniert werden.

Unabhängig davon, ob man mit absoluten Positionen des Objektsensors arbeitet oder mit relativen Positionen des Objektsensors zu den einzelnen Zeitpunkten jeder Detektion, kann man die relativen oder absoluten Positionen des statischen Objektes durch polares Anhängen aus den Positionen des Objektsensors berechnen. Dieses Verfahren ist besonders bevorzugt, weil beim polaren Anhängen der Richtungsfehler unmittelbar in die ermittelte Position des statischen Objektes eingeht.

Wenn mit dem erfindungsgemäßen Verfahren der Azimutwinkelfehler ermittelt worden ist, kann man aus der so gemessenen Position eines statischen Objektes auch eine fehlerkorrigierte, tatsächliche Position des statischen Objektes berechnen. Das erfindungsgemäße Verfahren ist daher auch geeignet, bei bekannter absoluter Position des Objektsensors fehlerkorrigierte absolute Positionen von statischen Objekten zu ermitteln, was beispielsweise für Kartierungsaufgaben herangezogen werden kann.

Umgekehrt kann man die fehlerkorrigierte absolute Position des statischen Objektes auch mit einer, beispielsweise aus Kartendaten bekannte, absoluten Position des statischen Objektes vergleichen und so die absolute Position des Objektsensors auch ohne Hilfsmittel, wie beispielsweise satellitengestützte Navigation, ermitteln.

Als Objektsensoren können unterschiedlichste Sensoren verwendet werden, insbesondere Sensoren die eine Winkel- und Entfernungsmessung ermöglichen, wie beispielweise Radarsensoren, Ultraschallsensoren, Lasersensoren (Laserscanner) oder Bildsensoren.

Besonders bevorzugt ist der Objektsensor an einem Fahrzeug, beispielsweise einem Kraftfahrzeug, montiert oder in diesem Fahrzeug verbaut. Das Fahrzeug ist vorzugsweise ein autonom oder teilautonom fahrendes Fahrzeug. Die Erfindung wird im Folgenden unter Bezugnahme auf ein in den beigefügten Zeichnungen dargestelltes schematisches Ausführungsbeispiel näher erläutert.

In den Zeichnungen zeigen:

Fig. 1    eine schematische Darstellung einer Sensorfehlausrichtung;

Fig. 2    die Detektion eines Objektes mittels eines an einem sich bewegenden Fahrzeug montierten Objektsensor;

Fig. 3    die geometrischen Verhältnisse der Relativposition eines Objektes zum Sensor bei einer angenommenen Sensorfehlausrichtung.

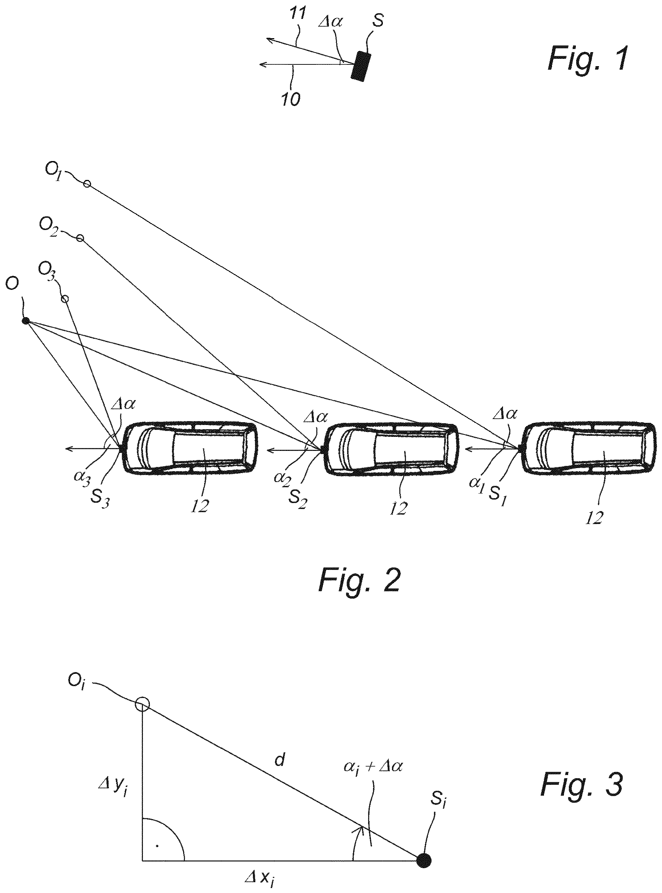

Fig. 1 zeigt einen Objektsensor S, der Objekte in der Umgebung des Sensors erfassen kann. Für die Berechnung der erfassten Sensordaten wird angenommen, dass der Sensor in Bewegungsrichtung des Sensors entlang Pfeil 10 ausgerichtet ist. Die tatsächliche Sensororientierung weicht aber lateral von der angenommenen Sensorausrichtung 10 ab und wird durch den Pfeil 11 dargestellt. Der Winkel $\Delta\alpha$ zwischen der angenommenen Sensorausrichtung 10 und der tatsächlichen Sensorausrichtung 11 stellt somit den Azimutwinkelfehler dar. Die Objektdatenerfassung soll in dargestellten Beispiel in der Zeichenebene erfolgen. Es handelt sich bei dem Azimutwinkelfehler $\Delta\alpha$ also um einen Fehler in der lateralen Ausrichtung des Sensors S.

Fig. 2 zeigt eine schematische Darstellung der Erfassung eines Objektes O durch ein sich bewegendes Fahrzeug 12 an, an welchem der Sensor S verbaut ist. Bei der ersten Messung befindet sich der Sensor in der Position $S_1$. Das Objekt O erscheint unter einem Azimutwinkel $\alpha_1$. Auf Grund des Sensorfehlers $\Delta\alpha$ erscheint das Objekt tatsächlich aber unter dem Winkel $\alpha_1 + \Delta\alpha$ an der Stelle $O_1$.

Zu einem zweiten Zeitpunkt hat sich das Fahrzeug 12 in die in Fig. 2 dargestellte Mittellageposition weiterbewegt. Das statische Objekt O befindet sich nach wie vor am selben Ort erscheint aber aus der Sensorposition $S_2$ unter einem größeren Winkel $\alpha_2$. Auf Grund des Azimutwinkelfehlers $\Delta\alpha$ erscheint das Objekt scheinbar aber am Ort $O_2$ unter einen Azimutwinkel $\alpha_2 + \Delta\alpha$.

Bei der dritten Messung hat sich das Fahrzeug 12 weiter nach links bewegt und der Sensor befindet sich am Ort $S_3$. Die tatsächliche Objektposition O erscheint hier unter einem noch größeren Winkel $\alpha_3$. Die scheinbare Position $O_3$ erscheint bei der dritten Messung unter einem Winkel $\alpha_3 + \Delta\alpha$

In Fig. 3 ist dargestellt, wie sich die scheinbare Objektposition $O_i$ durch polares Anhängen aus der Sensorposition $S_i$ ergibt. Bei bekanntem Abstand d zwischen Sensor $S_i$ und Objekt O, der sich beispielsweise durch Laufzeitenmessungen von Ultraschall- oder Radarimpulsen oder durch stereoskopische Bildauswertung ermitteln lässt, ergibt sich die Entfernung zwischen Sensor und scheinbarer Objektposition in kartesischen Koordinaten als.

$$\Delta x_i = d * \sin(\alpha_i + \Delta\alpha),$$

$$\Delta y_i = d * \cos(\alpha_i + \Delta\alpha).$$

Wird die Sensorposition $S_i$ entsprechend der Fahrzeugbewegung berücksichtigt, ergibt sich die Position des Objektes O durch polares Anhängen an die Position des Sensors S:

$$x_O = x_S + d * \sin(\alpha + \Delta\alpha),$$

$$y_O = y_S + d * \cos(\alpha + \Delta\alpha).$$

Die Objektposition eines statischen Objektes sollte sich bei Bewegung des Sensors nicht verändern, wenn die Objektposition O aus den ermittelten Objektpositionen $O_i$ unter Berücksichtigung des tatsächlichen Azimutwinkelfehlers $\Delta\alpha$ ermittelt wird. Entspricht der angenommene Azimutwinkelfehler $\Delta\alpha$ nicht dem tatsächlichen Azimutwinkelfehler, so werden die berechneten tatsächlichen Objektpositionen O mehr oder weniger große Abweichungen von der tatsächlichen Objektposition O haben, d. h. die aus den Werten $O_I$ zurückgerechneten Objektpositionen werden sich unterscheiden. Aus einer daraus ermittelten Fehlerkenngröße, wie beispielsweise der Summe der Helmert'schen Punktfehler für mehrere erfasste Objekte O kann dann durch geeignete Minimierung/Optimierungsverfahren der tatsächliche Azimutwinkelfehler $\Delta\alpha$ ermittelt werden.

So kann durch geschicktes Variieren des Winkels $\Delta\alpha$, erneutes Berechnen der Objektpositionen und Bestimmen der Summe des Helmert'schen Punktfehlers, mithilfe eines geeigneten Abbruchkriteriums ein Pseudo-Azimut-Winkel bestimmt werden. Das Abbruchkriterium kann beispielsweise beinhalten, dass sich die Summe des Helmert'schen Punktfehlers durch immer kleiner werdende Änderungen von $\Delta\alpha$ nicht mehr signifikant ändert. Beispielsweise kann man unter Annahme eines größtmöglichen Azimutwinkelfehlers von 2° die Summe des Helmert'schen Punktfehlers für die Werte $\Delta\alpha$=2°, $\Delta\alpha$=0° und $\Delta\alpha$=-2° berechnen. Im nächsten Iterationsschritt berechnet man die Summe des Helmert'schen Punktfehlers für die Werte $\Delta\alpha$=1° und $\Delta\alpha$=-1°. Sollte die Summe des Helmert'schen Punktfehlers für $\Delta\alpha$=1° kleiner sein, dann rechnet man im nächsten Iterationsschritt weiter mit $\Delta\alpha$=0,5° und $\Delta\alpha$=1,5°. Dies führt man so lange fort, bis sich die Summe des Helmert'schen Punktfehlers nicht signifikant ändert und nähert sich somit dem korrekten Pseudo-Azimut-Winkel an.

Alternativ kann man ein Optimierungsproblem formulieren, so dass $\Delta\alpha$ optimiert/gesucht wird in Hinblick darauf, dass $S_{sum}^H$ minimal wird. Dafür eignen sich Methoden der Ausgleichungsrechnung (z. B. Gauss-Markov-Modelle).

Auch ist es möglich, dass der Anteil des Fehlers, der tatsächlich durch die anderen Winkel verursacht wird, an verschiedenen Orten im Sensorkoordinatensystem verschieden groß ist. Das bedeutet, dass man theoretisch einen Pseudo-Azimut-Winkel für verschiedene Bereiche im Sensorkoordinatensystem bestimmen könnte, beispielsweise in Form einer beliebig großen Matrix, die genauer und stabiler bleiben würde.

Der größte Vorteil des Verfahrens ist, dass es ohne großen Aufwand während der Fahrt genutzt werden kann. Es ist außerdem ein schnelles Verfahren das wenig Ressourcen benötigt. Dies ist bei vielen bekannten Verfahren nicht der Fall. Die berechneten Positionen der Objekte unter Verwendung des "Pseudo-Azimut-Winkels" können zur Kartierung aber auch für die Positionierung mit Hilfe einer Karte verwendet werden. Das Verfahren bietet in seiner einfachsten Ausführungsform zwar keine absolute Kalibrierung, kann aber beispielsweise verwendet werden, zumindest eine Warnung zu geben, dass die verwendete Kalibrierung nicht passend ist. Dies könnte nachfolgende Anwendungen, die genaue Sensordaten brauchen, dazu bringen, in einen eingeschränkten oder nicht mehr funktionstüchtigen Modus überzugehen.

**Bezugszeichenliste**

| | |
|---|---|
| 10 | Pfeil, Bewegungsrichtung des Sensors, angenommene Sensororientierung |
| 11 | Pfeil, tatsächliche Sensororienierung |
| 12 | Fahrzeug |
| S | Sensor |
| $S_i$ | unterschiedliche Sensorpositionen (i=1,2,3) |
| O | Objekt |
| $O_i$ | unterschiedliche scheinbare Objektpositionen |
| $\Delta\alpha$ | Azimutwinkelfehler |
| $\alpha_i$ | Azimutwinkel bei verschiedenen Sensorpositionen (i=1,2,3) |

**Patentansprüche**

1. Verfahren zur Kalibrierung der Ausrichtung eines sich bewegenden Objektsensors, welches die Schritte umfasst:

   Erfassung der Bewegung des Objektsensors,
   mehrfache Detektion wenigstens eines statischen Objektes durch den sich bewegenden Objektsensor bei unterschiedlichen Positionen des Objektsensors,
   Berechnen der relativen Positionen des statischen Objektes bezüglich der korrespondierenden Positionen des Objektsensors,
   Berechnen von erwarteten Positionen des statischen Objektes aus den relativen Positionen unter Annahme eines Ausrichtungsfehlers des Objektsensors,
   Berechnen einer Fehlerkenngröße aus den erwarteten Positionen,
   Minimieren der Fehlerkenngröße durch Anpassung des Ausrichtungsfehlers des Objektsensors.

2. Verfahren gemäß Anspruch 1,
   **dadurch gekennzeichnet, dass** der Objektsensor das wenigstens eine statische Objekt in einer Ebene detektiert.

3. Verfahren gemäß Anspruch 2,
   **dadurch gekennzeichnet, dass**
   das wenigstens eine statische Objekt ein längliches Objekt ist, das in der Detektionsebene im wesentlichen punktförmig erscheint.

4. Verfahren gemäß einem der Ansprüche 1 bis 3,
   **dadurch gekennzeichnet, dass**
   der Ausrichtungsfehler des Objektsensors einen Azimutwinkelfehler umfasst.

5. Verfahren gemäß Anspruch 4,
   **dadurch gekennzeichnet, dass**
   die Fehlerkenngröße durch Ändern des Azimutwinkelfehlers iterativ minimiert wird.

6. Verfahren gemäß Anspruch 4,
   **dadurch gekennzeichnet, dass**
   die Fehlerkenngröße über ein Optimierungsverfahren minimiert wird.

7. Verfahren gemäß einem der vorherigen Ansprüche,
   **dadurch gekennzeichnet, dass**
   die Fehlerkenngröße aus dem Helmert'schen Punktfehler berechnet wird.

8. Verfahren gemäß einem der vorherigen Ansprüche,
   **dadurch gekennzeichnet, dass**

mehr als ein statisches Objekt erfasst wird.

9. Verfahren gemäß einem der vorherigen Ansprüche,
   **dadurch gekennzeichnet, dass**
   außerdem die absoluten Positionen des Objektsensors erfasst werden.

10. Verfahren gemäß einem der vorherigen Ansprüche,
    **dadurch gekennzeichnet, dass**
    die Positionen des statischen Objektes durch polares Anhängen aus den Positionen des Objektsensors berechnet werden.

11. Verfahren gemäß Anspruch 10,
    **dadurch gekennzeichnet, dass**
    eine fehlerkorrigierte Position des statischen Objektes berechnet wird.

12. Verfahren gemäß Anspruch 11,
    **dadurch gekennzeichnet, dass**
    eine absolute Position des Objektsensors aus der fehlerkorrigierten Position des statischen Objektes und einer bekannten absoluten Position des statischen Objektes ermittelt wird.

13. Verfahren gemäß einem der vorherigen Ansprüche,
    **dadurch gekennzeichnet, dass**
    der Objektsensor einen Radarsensor, einen Ultraschallsensor, einen Lasersensor oder einen Bildsensor umfasst.

14. Verfahren gemäß einem der vorherigen Ansprüche,
    **dadurch gekennzeichnet, dass** der Objektsensor in einem Fahrzeug verbaubar ist.

**Claims**

1. Method for calibrating the orientation of a moving object sensor, comprising the steps of:

   detecting the movement of the object sensor,
   repeated detection of at least one static object by the moving object sensor at different positions of the object sensor, calculating the relative positions of the static object with respect to the corresponding positions of the object sensor,
   calculating expected positions of the static object from the relative positions assuming an orientation error of the object sensor, calculating an error parameter from the expected positions, minimizing the error parameter by adjusting the orientation error of the object sensor.

2. The method according to claim 1,

   **characterized in that**
   the object sensor detects the at least one static object in a plane.

3. The method according to claim 2,

   **characterized in that**
   the at least one static object is an elongated object that appears essentially punctiform in the detection plane.

4. The method according to any one of claims 1 to 3,

   **characterized in that**
   the orientation error of the object sensor comprises an azimuth angle error.

5. The method according to claim 4,

   **characterized in that**

the error parameter is iteratively minimized by changing the azimuth angle error.

6. The method according to claim 4,

   **characterized in that**
   the error parameter is minimized via an optimization method.

7. The method according to any one of the preceding claims,

   **characterized in that**
   the error parameter is calculated from the Helmert point error.

8. The method according to any one of the preceding claims,

   **characterized in that**
   more than one static object is detected.

9. The method according to any one of the preceding claims,

   **characterized in that**
   the absolute positions of the object sensor can also be detected.

10. The method according to any one of the preceding claims,

    **characterized in that**
    the positions of the static object are calculated from the positions of the object sensor by polar appending.

11. The method according to claim 10,

    **characterized in that**
    an error-corrected position of the static object is calculated.

12. The method according to claim 11,

    **characterized in that**
    an absolute position of the object sensor is determined from the error-corrected position of the static object and a known absolute position of the static object.

13. The method according to any one of the preceding claims,

    **characterized in that**
    the object sensor comprises a radar sensor, an ultrasonic sensor, a laser sensor or an image sensor.

14. The method according to any one of the preceding claims,

    **characterized in that**
    the object sensor can be installed in a vehicle.

**Revendications**

1. Procédé d'étalonnage de l'alignement d'un capteur d'objet en mouvement, lequel comprend les étapes de :

   détection du mouvement du capteur d'objet,
   détection multiple d'au moins un objet statique par le capteur d'objet en mouvement à différentes positions du capteur d'objet, calcul des positions relatives de l'objet statique par rapport aux positions correspondantes du capteur d'objet,
   calcul de positions attendues de l'objet statique à partir des positions relatives en supposant une erreur d'alignement du capteur d'objet, calcul d'une grandeur caractéristique d'erreur à partir des positions attendues, minimisation de la grandeur caractéristique d'erreur par ajustement de l'erreur d'alignement du capteur d'objet.

2. Procédé selon la revendication 1,

   **caractérisé en ce que**
   le capteur d'objet détecte ledit au moins un objet statique dans un plan.

3. Procédé selon la revendication 2,

   **caractérisé en ce que**
   ledit au moins un objet statique est un objet allongé qui apparait dans le plan de détection essentiellement sous la forme d'un point.

4. Procédé selon l'une quelconque des revendications 1 à 3,

   **caractérisé en ce que**
   l'erreur d'alignement du capteur d'objet comprend une erreur d'angle azimutal.

5. Procédé selon la revendication 4,

   **caractérisé en ce que**
   la grandeur caractéristique d'erreur est minimisée itérativement par la modification de l'erreur d'angle azimutal.

6. Procédé selon la revendication 4,

   **caractérisé en ce que**
   la grandeur caractéristique d'erreur est minimisée à l'aide d'un procédé d'optimisation.

7. Procédé selon l'une quelconque des revendications précédentes,

   **caractérisé en ce que**
   la grandeur caractéristique est calculée à partir de l'erreur ponctuelle d'Helmert.

8. Procédé selon l'une quelconque des revendications précédentes,

   **caractérisé en ce que**
   plus d'un objet statique est détecté.

9. Procédé selon l'une quelconque des revendications précédentes,

   **caractérisé en ce que**
   les positions absolues du capteur d'objet sont en outre détectées.

10. Procédé selon l'une quelconque des revendications précédentes,

    **caractérisé en ce que**
    les positions de l'objet statique sont calculées par fixation polaire à partir des positions du capteur d'objet.

11. Procédé selon la revendication 10,

    **caractérisé en ce que**
    une position à erreur corrigée de l'objet statique est calculée.

12. Procédé selon la revendication 11,

    **caractérisé en ce que**
    une position absolue du capteur d'objet est déterminée à partir de la position à erreur corrigée de l'objet statique et d'une position absolue connue de l'objet statique.

**13.** Procédé selon l'une quelconque des revendications précédentes,

    **caractérisé en ce que**
le capteur d'objet comprend un capteur radar, un capteur à ultrasons, un capteur laser ou un capteur d'images.

**14.** Procédé selon l'une quelconque des revendications précédentes,

    **caractérisé en ce que**
le capteur d'objet peut être monté dans un véhicule.

Fig. 1

Fig. 2

Fig. 3

**IN DER BESCHREIBUNG AUFGEFÜHRTE DOKUMENTE**

**In der Beschreibung aufgeführte Patentdokumente**

- US 20100165102 A1
- US 201602267657 A1
- JP 2008222345 A
- US 20130218398 A1
- US 20150276923 A1
- DE 102012018012 A1
- WO 2016198563 A1